# FASCICULE DE BREVET EUROPEEN

(11) **EP 0 855 369 B1**
(45) Date de publication et mention de la délivrance du brevet: **10.10.2001**
(21) Numéro de dépôt: 98400098.4
(22) Date de dépôt: 20.01.1998
(51) Int. Cl.: C01B 39/48, C01B 39/12, B01J 29/70, B01J 29/86, C10G 11/05

(54) **Zéolithe au phosphore de type structural CON, sa préparation et son utilisation en craquage catalytique**
CON-typ phosphorhaltiger Zeolith und dessen Anwendung im katalytischen Crackverfahren
CON-type phosphorous-containing zeolite and its use in catalytic cracking

(30) Priorité: 27.01.1997 FR 9700980
(43) Date de publication de la demande: 29.07.1998
(73) Titulaire: INSTITUT FRANCAIS DU PETROLE, 92500 Rueil Malmaison (FR)
(72) Inventeur: Corma Canos, Avelino, 46022 Valencia (ES); Benazzi, Eric, 78400 Chatou (FR); Cauffriez, Hervé, 78380 Bougival (FR); Diaz Cabanas, Maria José, 46014 Valencia (ES); Grande Casas, Maria Sol, 46021 Valencia (ES); Camblor Fernandez, Miguel Angel, 46022 Valencia (ES); Mabilon, Gil, 78420 Carrieres Sur Seine (FR)

(56) Documents cités:
- WO-A-89/09185
- WO-A-95/07859
- US-A- 4 963 337
- US-A- 5 110 776
- US-A- 5 472 594
- S. I. ZONES ET AL.: "Boron-beta zeolite hydrothermal conversions: the influence of template structure and of boron concentration and source" MICROPOROUS MATERIALS, vol. 2, 1994, AMSTERDAM, NL, pages 543-555, XP002042512
- LOBO R F ET AL: "CIT-1: A NEW MOLECULAR SIEVE WITH INTERSECTING PORES BOUNDED BY 10- AND 12-RINGS" JOURNAL OF THE AMERICAN CHEMICAL SOCIETY, vol. 117, no. 13, 5 avril 1995, WASHINGTON, DC, US, pages 3766-3779, XP000673619

## Description

La présente invention concerne une nouvelle zéolithe au phosphore multidimensionnelle à larges pores de type structural CON, sa préparation et son utilisation notamment dans un procédé de craquage catalytique d'une charge hydrocarbonée. Plus précisément, elle concerne un tamis moléculaire, borosilicate qui peut être transformé en un aluminosilicate et stabilisé par au moins un composé phosphoré.

Les tamis moléculaires de nature zéolithique sont des matériaux cristallins comprenant un réseau de tétraèdres TO₄ tridimensionnels avec T égal à Si, Al, B, P, Ge, Ti, Ga, Fe, par exemple. Ce réseau définit un réseau microporeux intracristallin de dimensions comparables à celles de petites à moyennes molécules organiques. Le réseau microporeux peut être un système de canaux et/ou de cavités, façonné par le réseau cristallin, qui peut être identifié par son diagramme, particulier et spécifique, de diffraction des rayons X.

Les applications potentielles d'une zéolithe (par exemple, dans les procédés de catalyse, d'adsorption, d'échange cationique et de purification) dépendent principalement de la taille, de la forme et des caractéristiques (mono-, multidimensionnelles) de leur réseau microporeux et de leur composition chimique. Par exemple, dans les zéolithes de type aluminosilicate, la présence de tétraèdres AlO₄⁻ isolés dans une matrice de tétraèdres SiO₄ requiert la présence de cations de cations de compensation pour contrebalancer la charge négative du réseau. Typiquement, ces cations ont une grande mobilité et peuvent être échangés par d'autres, par exemple H⁺ ou NH₄⁺, ce dernier pouvant être transformé en H⁺ par calcination, ce qui conduit à un solide acide microporeux. La zéolithe est alors sous sa forme acide encore appelée forme hydrogène. Lorsque tous les cations de compensation sont des cations ammonium ou alkylammonium organiques, la calcination conduit directement à la forme acide de la zéolithe. Ces solides acides microporeux peuvent être utilisés dans les procédés de catalyse acide et leur activité et sélectivité dépendent à la fois de la force de l'acide, de la taille et des caractéristiques dimensionnelles de l'espace délimité dans le réseau, où se trouvent localisés les sites acides.

La taille des canaux peut être décrite par le nombre de tétraèdes TO₄ présents dans l'anneau délimitant les ouvertures de pores, élèment qui contrôle la diffusion des molécules. Ainsi, les canaux sont classés en catégories : les petits pores (ouvertures de pores annulaires délimités par un enchaînement de 8 tétraèdres TO₄ (8 MR), les pores moyens (10 MR) et les grands pores (12 MR), MR voulant dire membered ring en anglais.

L'art antérieur est illustré par les brevets US 5 110 776, US 5 472 594, WO-A-9507859 et la publication de S.I. ZONES et al. "Boron-beta zeolite hydrothermal conversions : the influence of template structure and of boron concentration and source", Microporous material Elsevier, vol. 2, 1994, Amsterdam, NL, pages 543-555.

Parmi de nombreuses zéolithes déjà décrites dans la littérature, les zéolithes de type structural CON, c'est à dire la zéolithe SSZ 26 (PCT/US 89/01179,1989), la zéolithe SSZ-33 (US 4963 337) et la zéolithe CIT-1 (J. AM. Chem. Soc, 1995, 117, 3766) sont intéressantes car ce sont les seules zéolithes synthétiques connues pour posséder un système de pores moyens (10 MR) et larges (12 MR) interconnectés.

Cette caractéristique structurale peut procurer des propriétés de sélectivité de forme intéressantes à ces matériaux en catalyse hétérogène. Le terme sélectivité de forme est généralement utilisé pour expliquer des sélectivités catalytiques spécifiques dues aux contraintes stériques qui existent à l'intérieur du système microporeux zéolithique. Ces contraintes peuvent agir sur les réactifs (diffusion des réactifs dans la zéolithe), sur les produits de la réaction (formation et diffusion des produits formés hors de la zéolithe) sur les intermédiaires réactionnels ou sur les états de transition réactionnels qui se forment dans la microporosité de la zéolithe durant les réactions. La présence de contraintes stériques appropriées permet dans certains cas d'éviter la formation d'états de transition et d'intermédiaires réactionnels conduisant à la formation de produits indésirables et améliore dans certains cas les sélectivités.

Cette famille de zéolithes à 10/12 MR consiste en intercroissances de deux polymorphes dans différentes proportions. Les différences entre les zéolithes SSZ-26, SSZ-33 et CIT-1 proviennent de la méthode de préparation, de la composition chimique (zéolithes/brut de synthèse) et à la proportion relative des polymorphes dans l'intercroissance. Ainsi, les zéolithes CIT-1 et SSZ-33 appartiennent toutes les deux à la catégorie des matériaux brut de synthèse des borosilicates. On entend par brut de synthèse toute zéolithe issue directement et sans modification intermédiaire, de la préparation. La zéolithe CIT-1 est sensiblement constituée d'un seul polymorphe, alors que la zéolithe SSZ-33 est une intercroissance. La zéolithe SSZ-26 est un aluminosilicate constitué d'une intercroissance.

Les trois structures dans leur composition silico-aluminique semblent être similaires. Cependant, leur préparation (celle de SSZ-26 et CIT-1) requiert des agents structurants coûteux et des procédés de synthèse longs à mettre en oeuvre. C'est ainsi que la zéolithe SSZ-26 a été décrite dans le brevet US 4910006 et le borosilicate SSZ-33, puis sous la forme aluminium dans le brevet US 4963337.

Ces zéolithes sont synthétisées en présence d'ions alcalins apportés par de l'hydroxyde de sodium. Ces ions doivent être éliminés par au moins une étape de d'échanges ioniques, par exemple par des cations ammoniums, et une étape de calcination, ce qui complique le procédé de préparation et le rend plus coûteux.

On a donc trouvé une méthode de préparation permettant de remédier à ces inconvénients, au cours de laquelle on synthétise, comme précurseur de la zéolithe au phosphore de type structural CON, d'abord la forme SSZ-33 contenant du bore, grâce à un nouvel agent structurant le N,N,N,triméthyl,1, adamantammonium hydroxyde (1-TMAda⁺, OH⁻), schéma 1, meilleur marché et en absence d'ions sodium.

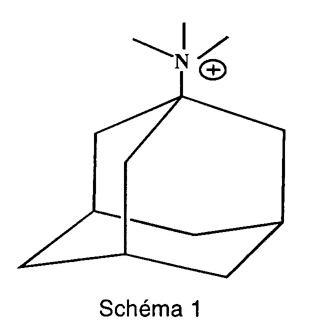

On échange ensuite la forme bore par de l'aluminium avec un excellent taux d'échange et on obtient ainsi la zéolithe SSZ-26 (aluminosilicate).

On a également observé que l'on pourrait aussi utiliser le N,N,N,triméthyl,2,adamantammonium hydroxyde (2-TMAda⁺, OH⁻), schéma 2, comme agent structurant.

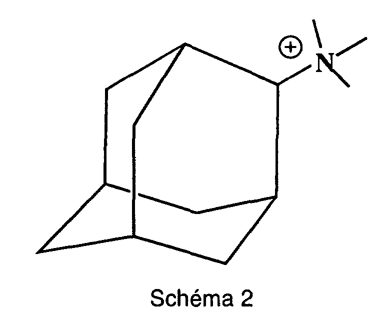

L'objet de l'invention concerne aussi une nouvelle zéolithe au phosphore de type structural CON, ses modes de préparation et son utilisation en craquage catalytique, seule ou en mélange avec un catalyseur de craquage conventionnel.

Le catalyseur de la présente invention est particulièrement bien adapté au craquage de fractions pétrolières en vue de produire une quantité importante de composés ayant 3 et/ou 4 atomes de carbone par molécule et plus particulièrement du propylène et des butènes. Le catalyseur de la présente invention est particulièrement bien adapté au craquage de factions pétrolières lourdes.

La présente invention concerne également le procédé de craquage de charges pétrolières lourdes, en présence du catalyseur défini ci-avant, ainsi que les procédés de préparation dudit catalyseur. Le craquage des charges hydrocarbonées, permettant d'obtenir des rendements élevés en essence pour automobile de très bonne qualité, s'est imposé dans l'industrie pétrolière dès la fin des années 1930. L'introduction des procédés fonctionnant en lit fluide (FCC ou Fluid Catalytic Cracking) ou en lit mobile (tel le TCC) dans lesquels le catalyseur circule en permanence entre la zone réactionnelle et le régénérateur où il est débarrassé du coke par combustion en présence d'un gaz contenant de l'oxygène, a introduit un progrès important par rapport à la technique du lit fixe.

Les catalyseurs les plus utilisés dans les unités de craquage sont depuis le début des années 1960 des zéolithes habituellement de structure faujasite. Ces zéolithes, incorporées dans une matrice amorphe, par exemple constituée de silice-alumine amorphe, et pouvant contenir des proportions variables d'argiles, sont caractérisées par des activités craquantes, vis à vis des hydrocarbures, 1 000 à 10 000 fois supérieures à celles des catalyseurs silice-alumine riches en silice utilisés jusque vers la fin des années 1950.

Vers la fin des années 1970, le manque de disponibilité en pétrole brut et la demande croissante en essence à haut indice d'octane ont conduit les raffineurs à traiter des bruts de plus en plus lourds. Le traitement de ces derniers constitue un problème difficile pour le raffineur en raison de leur teneur élevée en poisons des catalyseurs, notamment en composés métalliques (en particulier nickel et vanadium), des valeurs inhabituelles en carbone Conradson et surtout en composés asphalténiques.

Cette nécessité de traiter des charges lourdes et d'autres problèmes plus récents, tels que la suppression progressive mais générale dans l'essence des additifs à base de plomb, l'évolution lente mais sensible dans certains pays de la demande en distillats moyens (kérosènes et gazoles), ont de plus incité les raffineurs à recherche des catalyseurs améliorés permettant d'atteindre notamment les objectif suivants :
- catalyseurs plus stables thermiquement et hydrothermiquement et plus tolérants aux métaux,
- produire moins de coke à conversion identique,
- obtenir une essence d'indice d'octane plus élevé,
- sélectivité améliorée en distillats moyens.

Dans la majorité des cas, on cherche à minimiser le production de gaz légers, comprenant des composés ayant de 1 à 4 atomes de carbone par molécule, et, par conséquent, les catalyseurs sont conçus pour limiter la production de tels gaz légers.

Cependant il apparaît dans certains cas particuliers une demande importante en hydrocarbures légers de 2 à 4 atomes de carbone par molécule ou en certains d'entre eux, tel que les hydrocarbures en C3 et/ou C4 et plus particulièrement le propylène et les butènes.

L'obtention d'une quantité importante de butènes est en particulier intéressante dans le cas où le raffineur dispose d'une unité d'alkylation, par exemple des coupes C3-C4 contenant des oléfines, en vue de former une quantité supplémentaire d'essence à haut indice d'octane.

Ainsi le rendement global en essence de bonne qualité obtenue à partir des coupes d'hydrocarbures de départ est sensiblement augmenté.

L'obtention de propylène est particulièrement souhaitée dans certains pays en voie de développement, où apparaît une demande importante en ce produit.

Le procédé de craquage catalytique peut satisfaire dans une certaine mesure de telles demandes à condition en particulier d'adapter le catalyseur en vue de cette production. Une manière efficace d'adapter le catalyseur consiste à ajouter aux masses catalytiques un agent actif présentant les deux qualités suivantes :
1. craquer les molécules lourdes avec une bonne sélectivité en hydrocarbures à 3 et/ou 4 atomes de carbone, notamment en propylène et en butènes ;
2. être suffisamment résistant aux conditions sévères de pression partielle de vapeur d'eau et de température qui règnent dans le régénérateur d'un craqueur industriel.

Les travaux de recherche effectués par le demandeur sur de nombreuses zéolithes l'ont conduit à découvrir que, de façon surprenante, une zéolithe de type structural CON, de préférence la zéolithe SSZ-26, préparée notamment selon l'invention, puis modifiée en ajoutant du phosphore, permettait d'obtenir un catalyseur ayant une excellente activité et possédant une bonne sélectivité vis à vis d'une production d'hydrocarbures à 3 et/ou 4 atomes de carbone par molécule. L'utilisation d'une telle zéolithe selon l'invention permet d'obtenir un catalyseur de craquage conduisant à l'obtention d'une proportion plus importante de gaz, et notamment de propylène et de butènes.

Plus particulièrement, l'invention concerne une zéolithe au phosphore de type structural CON, multidimensionnelle, comprenant des pores moyens (10 MR) et larges (12 MR), contenant au plus 10% en poids de phosphore et ayant un diagramme de poudre, par diffraction aux rayons X après calcination sensiblement identique à celui donné dans le tableau 1.

**Tableau 1 :**

| Tableau de diffraction des rayons X d'un tamis moléculaire de type structural CON (par exemple borosilicate ou aluminosilicate) après calcination | |
|---|---|
| 2θ (degrés) ( angle de Bragg) | Intensité relative I/Io |
| 7,85 -7,95 | TF |
| 8,21 - 8,40 | f à m |
| 9,05 - 9,12 | f |
| 13,20 - 13,40 | f |
| 14,20 - 14,32 | f |
| 19,67 - 19,95 | f |
| 20,27 - 20,60 | F à TF |
| 21,36 - 21,63 | f à m |
| 22,03 - 22,23 | m à F |
| 22,89 - 22,75 | m |
| 23,06 - 23,33 | F à TF |
| 25,23 - 25,63 | f |
| 26,50 - 27,00 | m à F |
| 28,55 - 28,87 | f |
| 28,98 - 29,26 | f à m |
| 29,90 - 30,10 | f |
| 30,46 - 30,79 | f |
| 33,32 - 33,64 | f |
| 36,25 - 36,46 | tf à f |
| 36,77 - 36,91 | tf à f |
| très faible (tf) signifie intensité inférieure à 10, faible (f) signifie inférieure à 20, moyenne (m) signifie comprise entre 20 et 40, forte (F) signifie comprise entre 40 et 60, très forte (TF) signifie supérieure à 60. | |

La teneur en phosphore de la zéolithe de type structural CON peut être avantageusement au plus égale à 5%, exprimée en poids, par exemple comprise entre 1 et 2%.

La zéolithe au phosphore, calcinée, selon l'invention peut être sous une forme borosilicique (tableau 2)

**Tableau 2 :**

| Tableau de diffraction des rayons X d'un borosilicate de type structural CON après calcination | |
|---|---|
| 2θ (degrés) ( angle de Bragg) | Intensité relative I/Io |
| 7,93 | TF |
| 8,23 | f à m |
| 9,07 | f |
| 13,40 | f |
| 14,31 | f |
| 15,45 | tf |
| 16,82 | tf |
| 19,93 | f |
| 20,58 | TF |
| 21,61 | m |
| 22,21 | F à TF |
| 23,32 | TF |
| 25,62 | f à m |
| 26,99 | F à TF |
| 28,87 | f à m |
| 29,26 | m |
| 30,04 | f |
| 30,78 | f à m |
| 31,94 | f |
| 32,47 | f |
| 33,62 | f à m |
| 35,86 | f |
| 36,26 | f |
| 36,77 | f |
| 37,38 | f |
| très faible (tf) signifie inférieure à 10, faible (f) signifie inférieure à 20, moyenne (m) signifie comprise entre 20 et 40, forte (F) signifie comprise entre 40 et 60, très forte (TF) signifie supérieure à 60. | |

Elle peut être aussi sous une forme aluminosilicique (tableau 3).

**Tableau 3 :**

| Tableau de diffraction des rayons X d'un aluminosilicate de type structural CON après calcination | |
|---|---|
| 2θ (degrés) ( angle de Bragg) | Intensité relative I/Io |
| 7,87 | TF |
| 8,40 | f |
| 9,11 | f |
| 13,20 | f |
| 14,22 | f |
| 20,29 | m |
| 21,38 | f |
| 22,05 | m |
| 22,84 | m |
| 23,08 | m à F |
| 25,23 | f |
| 26,52 | m |
| 28,56 | f |
| 28,98 | f |
| 33,34 | f |
| très faible (tf) signifie inférieure à 10, faible (f) signifie inférieure à 20, moyenne (m) signifie comprise entre 20 et 40, forte (F) signifie comprise entre 40 et 60, très forte (TF) signifie supérieure à 60. | |

Le rapport atomique de la zéolithe sous la forme aluminosilicique Si/Al peut être compris entre 5 et 500 et avantageusement entre 7 et 300 et de manière encore plus préférée entre 10 et 200. Sous la forme borosilicique, le rapport atomique Si/B peut être compris entre les mêmes valeurs.

L'invention concerne aussi le procédé de préparation de la zéolithe au phosphore de type structural CON.

De manière générale, on imprègne, dans des conditions adéquates, au moins une zéolithe précurseur de type structural CON éventuellement calcinée, avec une solution aqueuse d'au moins un acide choisi dans le groupe de H₃PO₃, H₃PO₄, (NH₄)₂H PO₄, (NH₄)H₂PO₄ ou un de ses sels. Le produit obtenu est calciné à une température de 350 à 700° C.

La zéolithe précurseur sous forme aluminosilicique peut être une zéolithe SSZ-26 décrite dans le brevet US 4910006. On peut aussi utiliser comme précurseur, la zéolithe SSZ-33 sous forme bore décrite dans le brevet US 4963337, que l'on échange par de l'aluminium, ce qui conduit à une zéolithe de type SSZ-26. On peut enfin utiliser une zéolithe CIT-1 comme précurseur, échangée à l'aluminium, décrite dans J. Am. Chem. Soc, 1995, 117, 3766.

Sous la forme borosilicique, on peut utiliser, pour la préparation de la zéolithe au phosphore de type structural CON selon l'invention, à titre de précurseur, la zéolithe SSZ-33 ou la zéolithe CIT-1 décrites dans les références ci-avant.

Mais on peut préparer la zéolithe au phosphore selon l'invention en utilisant d'autres structurants. C'est ainsi que, selon un premier mode de préparation, on peut préparer la zéolithe précurseur de type structural CON, sous sa forme aluminosilicique selon les étapes suivantes :
a) on met en contact réactionnel, en absence substantielle d'ions alcalins, d'une zéolithe Beta, de type structural BEA, au bore (borosilicate) et d'un agent structurant organique qui est le N,N,N,triméthyl-1, adamantammonium hydroxyde (1-TMAda⁺,OH⁻). Le milieu réactionnel est chauffé à une température adéquate comprise entre 60 à 220° C.
   Les conditions de mise en contact étant :
   . B/Si atomique compris entre 0,02 et 0,2,
   . rapport atomique agent structurant/Si compris entre à 0,15 et 0,4, de préférence entre 0,19 et 0,35,
   . H₂O/Si compris entre 20 et 60, de préférence entre 30 et 50.
b) on calcine le produit de l'étape a), qui est ensuite mis en contact avec une solution acide d'aluminium pour former l'aluminosilicate, ou bien le produit de l'étape a) est mis en contact avec une solution acide, puis chauffé et mis en contact avec une solution acide d'aluminium, pour former l'aluminosilicate.

Selon un deuxième mode de mise en oeuvre du procédé, on peut préparer la zéolithe précurseur de type structural CON, sous sa forme aluminosilicique selon les étapes suivantes :
a) on met en contact, en absence substantielle d'ions alcalins, d'une zéolithe Beta, de type structural BEA, au bore (borosilicate) et d'un agent structurant organique qui est le N,N,N,triméthyl-2-adamantammonium hydroxyde (2-TMAda⁺,OH⁻). Le milieu réactionnel est chauffé à une température adéquate comprise entre 60 à 220° C.
b) on calcine le produit de l'étape a),
   on le met en contact avec une solution acide d'aluminium pour former l'aluminosilicate, ou bien on met en contact le produit de l'étape a) avec une solution acide, on chauffe et on met en contact le produit chauffé avec une solution acide d'aluminium, pour former l'aluminosilicate.

Les conditions de l'étape a) étant :
. B/Si atomique compris entre 0,02 et 0,2
. agent structurant/Si compris entre 0,15 et 0,4 de préférence entre 0,19 et 0,35
. H₂O/Si compris entre 20 et 60, de préférence entre 30 et 50.

Par absence substantielle d'ions alcalins, on entend un milieu contenant en général un rapport pondéral Na/Si < 0,005 correspondant aux impuretés présentes dans les réactifs, autrement dit un milieu dans lequel il n'y a pas eu d'ajout volontaire d'ions alcalins.

Ces deux modes de mise en oeuvre sont particulièrement avantageux puisque l'absence d'ions alcalins évite au moins une étape d'échange ionique, par une solution d'ions ammonium par exemple et une étape de calcination pour obtenir la forme acide.

Selon un troisième mode de mise en oeuvre du procédé, on peut préparer la zéolithe précurseur de type structural CON, sous sa forme aluminosilicique selon les étapes suivantes :
a) on met en contact, en présence substantielle d'ions alcalins, d'une zéolithe Beta de type structural BEA, au bore (borosilicate) et d'un agent structurant organique qui est le N,N,N,triméthyl-2-adamantammonium hydroxyde (2-TMAda⁺,OH⁻). Le milieu réactionnel est chauffé à une température adéquate comprise entre 60 à 220° C.
b) on calcine le produit de l'étape a), on le met en contact avec une solution acide d'aluminium pour former l'aluminosilicate, ou bien on met en contact le produit de l'étape a) avec une solution acide, on chauffe et on met en contact le produit chauffé avec une solution acide d'aluminium, pour former l'aluminosilicate.

Les conditions de l'étape a) étant :
. B/Si atomique compris entre 0,06 et 0,2, de préférence 0,1 à 0,2
. Agent structurant/Si atomique compris entre 0,10 et 0,4, de préférence entre 0,15 et 0,35
. H₂O/Si molaire entre 20 et 60, de préférence entre 30 et 50.

On peut préparer la zéolithe au phosphore sous une forme borosilicique, en utilisant d'autres structurants que ceux décrits pour la zéolithe SSZ-33 sous forme bore, pour la synthèse de la zéolithe précurseur.

C'est ainsi que, selon un premier mode de réalisation, la zéolithe précurseur de type structural CON, sous une forme borosilicique peut être préparée par une mise en contact, en absence substantielle d'ions alcalins, d'une zéolithe Beta de type structural BEA au bore (borosilicate) et d'un agent structurant organique qui est le N, N, N, triméthyl-1-adamantammonium hydroxyde, on chauffe à une température adéquate de 60 à 220° C et on calcine le produit obtenu.

Les conditions de mise en contact étant :
. B/Si atomique compris entre 0,02 et 0,2
. rapport atomique agent structurant/Si compris entre 0,15 et 0,4, de préférence entre 0,19 et 0,35
. H₂O/Si atomique compris entre 20 et 60, de préférence entre 30 et 50.

Selon un deuxième mode de réalisation du procédé, la zéolithe précurseur de type structural CON, sous une forme borosilicique peut être préparée par une mise en contact, en absence substantielle d'ions alcalins, d'une zéolithe Beta de type structural BEA au bore (borosilicate) et d'un agent structurant organique qui est le N,N,N, triméthyl-2-adamantammonium hydroxyde, et on chauffe à une température adéquate de 60 à 220° C.

Les conditions de mise en contact étant :
. B/Si atomique compris entre 0,02 et 0,2
. rapport atomique agent structurant/Si compris entre 0,15 et 0,4, de préférence entre 0,19 et 0,35,
. H₂O/Si atomique compris entre 30 et 60, de préférence entre 40 et 50 et on calcine le produit obtenu.

Enfin, selon un troisième mode de réalisation du procédé, la zéolithe précurseur, de type structural CON sous une forme borosilicique peut être préparée :
- par une mise en contact, en présence substantielle d'ions alcalins, d'une zéolithe Beta de type structural BEA au bore (borosilicate) et d'un agent structurant organique qui est le N,N,N, triméthyl-2 adamantammonium hydroxyde, et on chauffe à une température adéquate de 60 à 220° C.
   Les conditions de mise en contact étant :
   . B/Si atomique compris entre 0,06 et 0,2, de préférence 0,1 à 0,2
   . rapport atomique agent structurant/Si compris entre 0,10 et 0,4, de préférence entre 0,15 et 0,35,
   . H₂O/Si atomique compris entre 20 et 60, de préférence entre 30 et 50,
   et on calcine le produit obtenu.

Selon ces modes de préparation décrits, on peut avantageusement utiliser un rapport atomique agent structurant/Si compris entre 0,22 et 0,28 et de façon préférée compris entre 0,24 et 0,26.

La composition zéolithique selon l'invention peut être utilisée ou mélangée à d'autres matériaux résistant aux températures et autres conditions mises en oeuvre dans les procédés de conversion d'hydrocarbures, comme cela est décrit dans le brevet US 4910006 pour le craquage catalytique.

Par exemple, la zéolithe de type structural CON imprégnée au phosphore selon l'invention peut être utilisée avec des matrices d'oxydes inorganiques ou en combinaison avec des catalyseurs conventionnels de craquage catalytique. On peut citer, à ce titre, la zéolithe Y qui comprend la zéolithe Y ultrastable (modifiée et stabilisée à la vapeur), la zéolithe X, la zéolithe Beta, les zéolithes de type ZSM-5, les silicalites, les zéolithes de type LZ 10 et LZ 210.

Le catalyseur de la présente invention renferme également au moins une matrice habituellement amorphe ou mal cristallisée choisie par exemple dans le groupe formé par l'alumine, la silice, la magnésie, l'argile, l'oxyde de titane, la zircone, les combinaisons de deux au moins de ces composés et les combinaisons alumine-oxyde de bore.

La matrice est de préférence choisie dans le groupe formé par la silice, l'alumine, la magnésie, les mélanges silice-alumine, les mélanges silice-magnésie et l'argile.

La composition catalytique utilisée en craquage catalytique de charges hydrocarbonées peut être préparée par toutes les méthodes connues de l'homme du métier.

Ainsi la composition peut être obtenue, par exemple par incorporation simultanée de la zéolithe, au phosphore, de type structural CON, sous forme hydrogène, et de la zéolithe Y selon les méthodes classiques de préparation des catalyseurs de craquage contenant une zéolithe.

La composition peut être également obtenue par mélange mécanique d'un premier produit contenant une matrice et une zéolithe Y par exemple, et d'un second produit comprenant la zéolithe au phosphore, de type structural CON, sous forme hydrogène, décrite ci-avant avec une matrice qui peut être identique ou différente de celle contenue dans ledit premier produit. Ce mélange mécanique est habituellement effectué avec des produits séchés. Le séchage des produits est de préférence effectué par atomisation (Spray-drying), par exemple à une température de 100 à 500°C, habituellement durant 0,1 à 30 secondes.

Après séchage par atomisation, ces produits peuvent encore contenir environ 1 à 30% en poids de matière volatile (eau et ammoniac).

Le mélange zéolithe Y-matrice employé dans la préparation de la composition de la présente invention est habituellement un catalyseur classique de craquage de l'art antérieur (par exemple un catalyseur du commerce) ; la zéolithe, au phosphore, de type structural CON, décrite ci-dessus peut alors être considérée comme un additif qui peut être employé tel quel en vue de son mélange avec le catalyseur classique de craquage défini ci-avant, ou être préalablement incorporé à une matrice, l'ensemble matrice-zéolithe, au phosphore, de type structural CON, constituant alors l'additif que l'on mélange au catalyseur classique de craquage défini ci-avant, par exemple, après une mise en forme adéquate, par mélange mécanique des grains contenant la zéolithe, au phosphore, de type structural CON, sous forme hydrogène et des grains de catalyseur classique de craquage.

La composition catalytique ainsi préparée et utilisée en craquage peut renfermer :
a) de 0 à 60%, par exemple de 0,1 à 60%, de préférence de 4 à 50% et de manière encore plus préférée de 10 à 40% en poids d'au moins une zéolithe autre que la zéolithe selon l'invention et de préférence la zéolithe Y de structure faujasite,
b) de 0, 01 à 60%, de préférence de 0,05 à 40% et de manière encore plus préférée de 0,1 à 20% d'au moins une zéolithe de type structural CON sous forme hydrogène, ayant les caractéristiques données ci-avant et,
c) le complément étant constitué d'au moins une matrice.

Les conditions générales des réactions de craquage catalytique sont particulièrement bien connues pour ne pas être répétées ici dans le cadre de la présente invention (voir par exemple les brevets US-A-3 293 192, 3 449 070, 4 415 438, 3 518 051 et 3 607 043 incorporés comme références).

Dans le but de produire la plus grande quantité possible d'hydrocarbures gazeux à trois et/ou quatre atomes de carbone par molécule, et notamment de propylène et de butènes, il est parfois avantageux d'augmenter légèrement la température à laquelle on effectue le craquage, par exemple de 10 à 50°C. Le catalyseur de la présente invention est cependant dans la majorité des cas suffisamment actif pour qu'une telle augmentation de température ne soit pas nécessaire. Les autres conditions de craquage sont inchangées par rapport à celles employées dans l'art antérieur.

Les conditions de craquage catalytique peuvent être les suivantes :
. temps de contact compris entre 10 et 10000 millisecondes
. rapport pondéral catalyseur sur charge (C/O) compris entre 0,5 et 50
. température de 400°C à 800°C
. pression 0,5 à 10 bar (1 bar = 10⁵ Pa)

Les exemples suivants illustrent la présente invention sans toutefois en limiter la portée.

### Exemple 1 - Synthèse d'une zéolithe borosilicate multidimensionnelle à larges pores de type structural CON.

On mélange 7,374 g d'une solution 0,5 M de 1-N,N,N, triméthyl adamantammonium, (1-TMAda⁺ OH-) et 6, 813 g d'eau distillée et on y ajoute 1 g d'une zéolithe Beta au bore calcinée de rapport atomique Si/B, égal à 14,7 et synthétisée selon le mode opératoire suivant :
21,01 g d'une solution d'hydroxyde de tétraéthyl ammonium (35% poids) sont dilués par 7,93 g d'eau. Puis, dans la solution ainsi obtenue sont dissous 0,62g d'acide borique (H3BO3) auxquels on ajoute 6 g de silice sous forme d'Aérosil 200. Le mélange réactionnel est chauffé dans un autoclave en acier chemisé en Teflon à 150°C durant 6 jours. L'autoclave est soumis à un mouvement de rotation de fréquence 60 tours/minute. A la fin de cette période, le produit obtenu est filtré, lavé à l'eau distillée et séché à 100°C durant 6 heures. Le diagramme de diffraction des rayons X du solide ainsi préparé est caractéristique d'une zéolithe béta au bore.

Le mélange initial de 1-N,N,N, triméthyl adamantammonium et de zéolithe Beta au bore, précédemment préparé, est agité pendant 15 minutes. Ce mélange possède les rapports molaires suivants :
B/Si = 0,067
1-TMAda⁺OH⁻/Si = 0,23
Na/Si = 0
OH⁻/Si = 0,23
H₂O/Si = 46.

On réalise la cristallisation sans agitation dans un autoclave en acier inox recouvert de PTFE, à 150°C pendant 9 jours. Après cette période, l'autoclave est refroidi et les produits sont filtrés et lavés à l'eau.

La zéolithe de type structural CON obtenue (SSZ-33) possède un rapport atomique Si/B, déterminé par analyse chimique est d'environ 17.

Après calcination à 580°C pour éliminer le structurant organique occlus dans le microporosité, la zéolithe possède un volume microporeux de 0,2 cm³.g⁻¹ déterminé par adsorption sur azote à 77° K et son diagramme de diffraction des rayons X est sensiblement comparable à celui du tableau 2.

### Exemple 2 - Transformation de borosilicates à larges pores de type structural CON en aluminosilicate à larges pores de type structural CON (SSZ-26)

On place en suspension 1 g de la zéolithe borosilicate calcinée de l'exemple 1, dans 50 ml d'une solution à 5% poids de Al(NO₃)₃. Le mélange est ensuite chauffé à reflux pendant 24 heures, puis filtré, lavé à l'eau et séché à 100°C. Un échange à 92% d'aluminium est obtenu. Après échange l'échantillon présente une bonne cristallinité déterminé par analyse aux rayons X. Le diagramme de diffraction des rayons X est sensiblement comparable à celui du tableau 3. La présence d'une bande à 3 620 cm⁻¹ dans le spectre infra-rouge de l'échantillon, après chauffage 400°C sous un vide de 10-³ Pa correspond aux OH, Si-(OH)-AI, acides de la zéolithe. Les OH acides présentent une forte acidité de type Broensted mise en évidence par l'adsorption de la pyridine et sa désorption à des températures croissantes. La zéolithe, aluminosilicate de type structural CON, ainsi obtenue est dénommée CON.

### Exemple 3 - Préparation de la zéolithe au phosphore de type structural CON selon l'invention (CON-P1)

L'aluminosilicate multidimensionnel à larges pores préparé selon l'exemple 2 est agité dans une suspension d'une solution de H₃PO₄ dans l'eau (0,0745 g de H₃PO₄, 85% dans 20 ml d'eau). Le rapport en poids liquide sur zéolithe est de 10. La suspension est évaporée à sec à 80°C sous 20 Torr. Après séchage, l'échantillon est calciné à 120°C. La teneur pondérale de la zéolithe, en phosphore est de 1%. Le solide ainsi obtenu est référencé CON-P1.

Son diagramme de diffraction aux rayons X est sensiblement comparable à celui du tableau 3.

### Exemple 4 - Préparation de la zéolithe au phosphore de type structural CON selon l'invention (CON-P2)

On prépare une zéolithe selon l'exemple 3 mais avec une solution contenant 0,149 g de H₃PO₄, 85%, dans 20 ml d'eau. Après séchage, la teneur en phosphore de la zéolithe est de 2% en poids. Le solide ainsi obtenu est référencé CON-P2.

### Exemple 5 - Préparation des additifs A1, A2 et A3 de craquage à base de zéolithes de type structural CON

Les zéolithes de type structural CON, respectivement préparées dans les exemples 2, 3 et 4, sont préalablement traitées à la vapeur d'eau à 750°C pendant 5 heures avant d'être utilisées pour la préparation d'additifs de craquage, respectivement A1, A2 et A3. Ces préparations sont effectuées en réalisant un mélange mécanique classique à raison de 30% poids de zéolithe et 70% poids de silice amorphe, préalablement calcinée, de granulométrie comparable à celle des zéolithes de type structural CON sous forme hydrogène.

Le mélange ainsi obtenu est pastillé, puis réduit en petits agrégats à l'aide d'une machine à concasser. La fraction des grains de taille comprise entre 40 µm et 200 µm (1µm=10⁻⁶ m) est ensuite recueillie par tamisage et constitue l'additif. Les compositions et les zéolithes utilisées pour préparer les différents additifs sont reportés au tableau 4.

**Tableau 4**

| **Additifs** | **Zéolithe utilisée et % poids dans l'additif** | **Exemple de la préparation de la zéolithe** |
|---|---|---|
| **A1** | CON (30% poids) | exemple 2 |
| **A2** | CON-P1 (30% poids) | exemple 3 |
| **A3** | CON-P2 (30% poids) | exemple 4 |

### Exemple 6 - Préparation d'un catalyseur de craquage non conforme à l'invention (comparatif)

Une zéolithe US-Y possédant un paramètre de maille de 24,26 Å (1Å=10⁻¹⁰m), qui est une zéolithe Y de type faujasite ayant subi un traitement hydrothermique, est mise en forme de la même façon que les zéolithes de type structural CON selon le mode opératoire décrit dans l'exemple 5, à raison de 30% poids de zéolithe US-Y et 70% poids de silice. Le catalyseur ainsi obtenu est référencé CATo et est non conforme à l'invention.

### Exemple 7 - Utilisation des catalyseurs de craquage

Les additifs A1 A2 et A3 préparés précédemment sont mélangés à raison de 30% poids au catalyseur CATo, afin d'obtenir respectivement les catalyseurs CAT1, CAT2 et CAT3.

Un gazole sous vide dont les caractéristiques sont données dans le tableau 5 est craqué en présence des catalyseurs CATo, CAT1, CAT2 et CAT3, dans une unité MAT (Microactivity test), dans les conditions de réactions suivantes :

| | |
|---|---|
| durée d'injection de la charge | 30 secondes |
| rapport catalyseur sur charge (C/O) | 0,7 et 0,9 |
| température de réaction | 520°C |

**Tableau 5**

| | |
|---|---|
| Densité à 60°C g/cm3 | 0,916 |
| Indice de réfraction à 67°C | 1,49325 |
| Point d'aniline | 76 |
| Soufre (% poids) | 2,7 |
| Azote % poids | 0,15 |
| C C R (% poids) | 0,09 |
| Ni (ppb) | 30 |
| V (ppb) | < 25 |
| Masse moléculaire moyenne | 405 |
| KUOP | 11,84 |
| Distillation ASTMD 1160 | |
| 10% | 400°C |
| 30% | 411°C |
| 50% | 425°C |
| 70% | 449°C |
| 90% | 489°C |

Les variations d'activité de sélectivités observée, dues à la présence de l'additif zéolithique, sont reportées dans le tableau 6.

**Tableau 6**

| **Catalyseur Additif** | **CATo** | | **CAT1 CON (0% P) (A1)** | | **CAT2 CON-P1 (A2)** | **CAT3 CON-P2 (A3)** |
|---|---|---|---|---|---|---|
| **C/O** | 0,7 | 0,9 | 0,7 | 0,9 | 0,7 | 0,7 |
| **Conversion %poids** | 78 | 86 | 79 | 87 | 87 | 85 |
| **Gaz (C**_{**1**}**-C4)%*** | 19 | 25 | 25,5 | 32,5 | 32,0 | 32,1 |
| **Essence %*** | 44 | 47 | 41,5 | 42 | 41,9 | 41,8 |
| **Gasole %*** | 9,9 | 8,4 | 8,7 | 7,3 | 6,5 | 6,4 |
| **Coke %*** | 3,6 | 4,7 | 2,7 | 3,7 | 2,9 | 2,8 |
| **C**_{**3**}**=%*** | 4,8 | 5,7 | 6,2 | 7,4 | 8,0 | 7,9 |
| **ΣC**_{**4**}**= %*** | 5,1 | 6,2 | 7,1 | 7,6 | 7,8 | 8,5 |

| | | | | | | |
|---|---|---|---|---|---|---|
| (* : %poids) | | | | | | |

Les résultats obtenus dans le tableau 6, montrent que les zéolithes selon l'invention conduisent à des catalyseurs CAT2 et CAT3 plus actifs que le catalyseur comprenant un additif zéolithique SSZ-26 non modifié au phosphore et que le catalyseur CATo sans additif. En effet, on utilise moins de catalyseur pour convertir la même quantité de charge. Par ailleurs, les catalyseurs selon l'invention CAT2 et CAT3 conduisent à des rendements en propylène (C₃= ) et butènes (ΣC₄= ) améliorés à isoconversion.

### Exemple 8 - Utilisation d'une zéolithe multidimensionnelle à larges pores de type structural CON modifiée au phosphore (1%) en tant que catalyseur unique de craquage.

Les additifs A1 et A3 préparés dans l'exemple 5 sont utilisés dans cet exemple en tant que catalyseur unique de craquage de la charge hydrocarbonée, selon l'exemple 6, dans les mêmes conditions opératoires. Les performances catalytiques sont comparées au catalyseur CATo et sont reportées dans le tableau 7.

On constate que la zéolithe selon l'invention, contenue dans l'additif A3, produit plus de gaz, et de meilleurs rendements en propène (C₃ = ) et en butènes (ΣC₄ = ), moins de coke, moins d'essence et de gazole, à isoconversion.

**Tableau 7**

| | **CATo** | **A1 CON (0% P)** | **A3 CON (2% P)** |
|---|---|---|---|
| **conversion - % pds** | 65 | 65 | 65 |
| **Gases - % pds C**_{**1**} **- C**_{**4**} | 14 | 29,5 | 32 |
| **Essence - % pds** | 37 | 28,2 | 28,1 |
| **Gazole - % pds** | 11 | 6 | 5,3 |
| **Coke - % pds** | 2,3 | 1,7 | 0,8 |
| **C**_{**3**}**= - % pds** | 3,2 | 7,9 | 9,1 |
| **(ΣC**_{**4**}**= ) - % pds** | 3,9 | 10,9 | 12,5 |

### Exemple 9 : Préparation d'un borosilicate au phosphore de type structural CON

Le solide préparé selon l'exemple 1 est imprégné par du phosphore selon l'exemple 3, de manière à déposer 1% poids de phosphore. Après calcination à 580°C, on obtient un solide dont le diagramme de diffraction des rayons X est sensiblement comparable au tableau 2.

### Exemple 10 : Préparation du catalyseur CAT-4, selon l'invention, et utilisation du catalyseur en craquage.

Le borosilicate au phosphore de type structural CON, préparé dans l'exemple 9, est utilisé pour préparer un additif de craquage A4 selon l'exemple 5 et pour préparer un catalyseur de craquage CAT-4 selon l'exemple 7. Ce catalyseur CAT-4, testé dans les conditions opératoires décrites dans l'exemple 7 conduit à une amélioration des rendements en propène et butènes à iso-conversion par rapport aux catalyseurs CATo et aussi par rapport à un catalyseur comportant un borosilicate SSZ-33 (préparé selon l'exemple 1) et ne contenant pas de phosphore.

## Revendications

1. Zéolithe au phosphore, de type structural CON, contenant au plus 10% en poids de phosphore et ayant un diagramme de diffraction des rayons X après calcination, donné dans le tableau suivant :
| 2θ (degrés) ( angle de Bragg) | Intensité relative I/Io |
|---|---|
| 7,85 -7,95 | TF |
| 8,21 - 8,40 | f à m |
| 9,05 - 9,12 | f |
| 13,20 - 13,40 | f |
| 14,20 - 14,32 | f |
| 19,67 - 19,95 | f |
| 20,27 - 20,60 | F à TF |
| 21,36 -21,63 | f à m |
| 22,03 - 22,23 | m à F |
| 22,89 - 22,75 | m |
| 23,06 - 23,33 | F à TF |
| 25,23 - 25,63 | f |
| 26,50 - 27,00 | m à F |
| 28,55 - 28,87 | f |
| 28,98 - 29,26 | f à m |
| 29,90-30,10 | f |
| 30,46 - 30,79 | f |
| 33,32 - 33,64 | f |
| 36,25 - 36,46 | tf à f |
| 36,77 - 36,91 | tf à f |
| très faible (tf) signifie intensité inférieure à 10, faible (f) signifie inférieure à 20, moyenne (m) signifie comprise entre 20 et 40, forte (F) signifie comprise entre 40 et 60, très forte (TF) signifie supérieure à 60. | |

2. Zéolithe selon la revendication 1, sous la forme aluminosilicique, de préférence avec un rapport atomique Si/Al compris entre 5 et 500.

3. Zéolithe selon la revendication 1, sous la forme borosilicique, de préférence avec un rapport atomique Si/B compris entre 5 et 500.

4. Zéolithe selon l'une des revendications 1 à 3 dans laquelle la teneur en phosphore est au plus égale à 5% en poids de la zéolithe.

5. Procédé de préparation de la zéolithe au phosphore de type structural CON, selon l'une des revendications 1 à 4, dans lequel on imprègne, dans des conditions adéquates, au moins une zéolithe précurseur de type structural CON, éventuellement calcinée, avec une solution aqueuse d'au moins un acide choisi dans le groupe de H₃PO₃, H₃PO₄, (NH₄)₂HPO₄, (NH₄)H₂PO₄ ou un de ses sels et on calcine le produit obtenu à une température de 350 à 700°C.

6. Procédé selon la revendication 5, dans lequel la zéolithe précurseur, de type structural CON, est sous une forme aluminosilicique, préparée selon les étapes suivantes :
a) on met en contact, en absence substantielle d'ions alcalins, d'une zéolithe Beta de type structural BEA au bore (borosilicate) et d'un agent structurant organique qui est le N,N,N, triméthyl-1-adamantammonium hydroxyde, et on chauffe à une température adéquate de 60 à 220° C ;
les conditions de l'étape a) étant :
. B/Si atomique compris entre 0,02 et 0,2,
. rapport atomique agent structurant/Si compris entre à 0,15 et 0,4 de préférence entre 0,19 et 0,35,
. H₂O/Si compris entre 20 et 60, de préférence entre 30 et 50 ;
b) on calcine le produit de l'étape a), on le met en contact avec une solution acide d'aluminium pour former l'aluminosilicate, ou bien on met en contact le produit de l'étape a) avec une solution acide, on chauffe et on met en contact le produit chauffé avec une solution acide d'aluminium, pour former l'aluminosilicate.

7. Procédé selon la revendication 5, dans lequel la zéolithe précurseur de type structural CON est sous une forme borosilicique, préparée par une mise en contact, en absence substantielle d'ions alcalins, d'une zéolithe Beta de type structural BEA au bore (borosilicate) et d'un agent structurant organique qui est le N, N, N, triméthyl-1-adamantammonium hydroxyde, on chauffe à une température adéquate de 60 à 220° C et on calcine le produit obtenu,
les conditions de mise en contact étant
. B/Si atomique compris entre 0,02 et 0,2
. rapport atomique agent structurant/Si compris entre 0,15 et 0,4, de préférence entre 0,19 et 0,35
. H₂O/Si compris entre 20 et 60, de préférence entre 30 et 50.

8. Procédé selon la revendication 5, dans lequel la zéolithe précurseur de type structural CON est sous une forme aluminosilicique, préparée selon les étapes suivantes :
a) on met en contact, en absence substantielle d'ions alcalins, d'une zéolithe Beta de type structural BEA au bore (borosilicate) et d'un agent structurant organique qui est le N,N,N, triméthyl-2-adamantammonium hydroxyde, on chauffe à une température adéquate de 60 à 220° C ;
les conditions de l'étape a) étant :
. B/Si atomique compris entre 0,02 et 0,2
. rapport atomique agent structurant/Si compris entre 0,15 et 0,4, de préférence entre 0,19 et 0,35,
. H₂O/Si compris entre 20 et 60, de préférence entre 30 et 50.
b) on calcine le produit de l'étape a), on le met en contact avec une solution acide d'aluminium pour former l'aluminosilicate, ou bien on met en contact le produit de l'étape a) avec une solution acide, on chauffe et on met en contact le produit chauffé avec une solution acide d'aluminium, pour former l'aluminosilicate ;

9. Procédé selon la revendication 5, dans lequel la zéolithe précurseur de type structural CON est sous la forme borosilicique, préparée :
- par une mise en contact, en absence substantielle d'ions alcalins, d'une zéolithe Beta de type structural BEA au bore (borosilicate) et d'un agent structurant organique qui est le N,N,N, triméthyl-2 adamantammonium hydroxyde, et on chauffe à une température adéquate de 60 à 220° C ;
les conditions de mise en contact étant :
. B/Si atomique compris entre 0,02 et 0,2
. agent structurant/Si compris entre 0,15 et 0,4, de préférence entre 0,19 et 0,35,
. H₂O/Si compris entre 30 et 60, de préférence entre 40 et 50 ; et on calcine le produit obtenu.

10. Procédé selon la revendication 5, dans lequel la zéolithe précurseur de type structural CON est sous la forme aluminosilicique, préparée selon les étapes suivantes :
a) on met en contact, en présence substantielle d'ions alcalins, une zéolithe Beta de type structural BEA au bore (borosilicate) et un agent structurant organique qui est le N,N,N, triméthyl-2 adamantammonium hydroxyde, et on chauffe à une température adéquate de 60 à 220° C ;
les conditions de l'étape a) étant :
. B/Si atomique compris entre 0,06 et 0,2, de préférence 0,1 à 0,2
. rapport atomique agent structurant/Si compris entre 0,10 et 0,4, de préférence entre 0,15 et 0,35,
. H₂O/Si compris entre 20 et 60, de préférence entre 30 et 50.
b) on calcine le produit de l'étape a), on le met en contact avec une solution acide d'aluminium pour former l'aluminosilicate, ou bien on met en contact le produit de l'étape a) avec une solution acide, on chauffe et on met en contact le produit chauffé avec une solution acide d'aluminium, pour former l'aluminosilicate.

11. Procédé selon la revendication 5, dans lequel la zéolithe précurseur de type structural CON est sous une forme borosilicique, préparée :
- par une mise en contact, en présence substantielle d'ions alcalins, d'une zéolithe Beta de type structural BEA au bore (borosilicate) et d'un agent structurant organique qui est le N,N,N, triméthyl-2 adamantammonium hydroxyde, et on chauffe à une température adéquate de 60 à 220° C ;
les conditions de mise en contact étant :
. B/Si atomique compris entre 0,06 et 0,2, de préférence 0,1 à 0,2
. agent structurant/Si compris entre 0,10 et 0,4, de préférence entre 0,15 et 0,35,
. H₂O/Si compris entre 20 et 60, de préférence entre 30 et 50, et on calcine le produit obtenu.

12. Procédé selon la revendication 5 dans lequel la zéolithe précurseur sous forme aluminosilicilique est une zéolithe SSZ 26, une zéolithe SSZ 33 échangée à l'aluminium ou une zéolithe CIT-1 échangée à l'aluminium.

13. Procédé selon la revendication 5 dans lequel la zéolithe précurseur sous forme borosilicique est une zéolithe SSZ 33 ou une zéolithe CIT-1.

14. Procédé selon l'une des revendications 6 à 11, dans lequel le rapport atomique agent structurant/Si est compris entre 0,22 et 0,28 et de façon préférée compris entre 0,24 et 0,26.

15. Utilisation d'une zéolithe selon l'une des revendications 1 à 4 ou préparée selon l'une des revendications 5 à 14 dans un procédé de craquage catalytique d'une charge hydrocarbonée.

16. Utilisation d'une zéolithe selon la revendication 15 dans une composition catalytique comprenant un catalyseur de craquage autre que ladite zéolithe.

17. Utilisation selon la revendication 16 dans laquelle les pourcentages pondéraux sont les suivants :
a) de 0,1 à 60%, de préférence de 4 à 50% et de manière encore plus préférée de 10 à 40% en poids d'au moins une zéolithe autre que la zéolithe selon l'invention et de préférence la zéolithe Y de structure faujasite,
b) de 0, 01 à 60%, de préférence de 0,05 à 40% et de manière encore plus préférée de 0,1 à 20% d'au moins une zéolithe de type structural CON sous forme hydrogène et,
c) le complément étant constitué d'au moins une matrice.

## Patentansprüche

1. Zeolith mit Phosphor des Strukturtyps CON, der höchstens 10 Gew.-% Phosphor enthält und ein Röntgendiffraktogramm nach Kalzinierung hat, das in der folgenden Tabelle angegeben ist:
| 2θ (Grad) Braggscher Winkel | relative Intensität I/I₀ |
|---|---|
| 7,85 - 7,95 | TF |
| 8,21 - 8,40 | f bis m |
| 9,05 - 9,12 | F |
| 13,20 - 13,40 | F |
| 14,20 - 14,32 | F |
| 19,67 - 19,95 | F |
| 20,27 - 20,60 | F bis TF |
| 21,36 - 21,63 | f bis m |
| 22,03 - 22,23 | m bis F |
| 22,89 - 22,75 | m |
| 23,06 - 23,33 | F bis TF |
| 25,23 - 25,63 | f |
| 26,50 - 27,00 | m bis F |
| 28,55 -28,87 | f |
| 28,98 - 29,26 | f bis m |
| 29,90 - 30,10 | f |
| 30,46 - 30,79 | f |
| 33,32 - 33,64 | f |
| 36,25 - 36,46 | tf bis f |
| 36,77 - 36,91 | tf bis f |
| sehr schwach bedeutet eine Intensität kleiner als 10, schwach (f) bedeutet kleiner als 20, mittel (m) bedeutet zwischen 20 und 40 liegend, stark (F) bedeutet zwischen 40 und 60 liegend, sehr stark (TF) bedeutet größer als 60. | |

2. Zeolith nach Anspruch 1, in der Aluminosilikatform, vorzugsweise mit einem Si/Al-Atomverhältnis, das zwischen 5 und 500 liegt.

3. Zeolith nach Anspruch 1 in der Borosilikatform, vorzugsweise mit einem Si/B-Atomverhältnis, das zwischen 5 und 500 liegt.

4. Zeolith nach einem der Ansprüche 1 bis 3, in dem der Gehalt an Phosphor höchstens gleich 5 Gew.-% des Zeoliths ist.

5. Herstellungsverfahren des Zeoliths mit Phosphor vom Strukturtyp CON, nach einem der Ansprüche 1 bis 4, in dem man unter adäquaten Bedingungen wenigstens einen Vorläufer-Zeolith vom Strukturtyp CON, der ggf. kalziniert ist, mit einer wässrigen Lösung wenigstens einer Säure imprägniert, die in der Gruppe aus H₃PO₃, H₃PO₄, (NH₄)₂HPO₄, (NH₄)H₂PO₄ gewählt ist, oder einem ihrer Salze und man das erhaltene Produkt bei einer Temperatur von 350 bis 700 °C kalziniert.

6. Verfahren nach Anspruch 5, in dem der Zeolithvorläufer vom Strukturtyp CON in der Aluminosilikatform gemäß den folgenden Stufen hergestellt wird:
a) man bringt im wesentlichen in Abwesenheit von Alkaliionen einen Beta-Zeolith vom Strukturtyp BEA mit Bor (Borosilikat) und einem organisches Strukturbildner in Kontakt, der N,N,N,Trimethyl-1-Adamantylammoniumhydroxid ist, und man erhitzt auf eine geeignete Temperatur von 60 bis 220 °C;
wobei die Bedingungen der Stufe a) sind:
B/Si liegt atomar zwischen 0,02 und 0,2,
Atomverhältnis Strukturbildner/Si liegt zwischen 0,15 und 0,4, vorzugsweise zwischen 0,19 und 0,35,
H₂O/Si liegt zwischen 20 und 60, vorzugsweise zwischen 30 und 50;
b) man kalziniert das Produkt der Stufe a), man bringt es mit einer sauren Aluminiumlösung in Kontakt, um Aluminosilikat zu bilden oder man bringt das Produkt der Stufe a) auch in Kontakt mit einer sauren Lösung, man erhitzt und man bringt das erhitzte Produkt mit einer sauren Aluminiumlösung in Kontakt, um Aluminosilikat zu bilden.

7. Verfahren nach Anspruch 5, wobei der Zeolithvorläufer vom Strukturtyp CON in einer Borosilikatform durch ein In-Kontakt-Bringen im wesentlichen in Abwesenheit von Alkaliionen, von einem Beta-Zeolith vom Strukturtyp BEA mit Bor (Borosilikat) und einem organischen Strukturbildner, der N,N,N,Trimethyl-1-Adamantylammoniumhydroxid ist, hergestellt wird, man auf eine geeignete Temperatur von 60 bis 220 °C erhitzt und man das erhaltene Produkt kalziniert, wobei die Bedingungen des In-Kontakt-Bringens die folgenden sind:
. B/Si atomar zwischen 0,02 und 0,2 liegend
. Atomverhältnis Strukturbildner/Si zwischen 0,15 und 0,4, vorzugsweise zwischen 0,19 und 0,35 liegend.
. H₂O/Si zwischen 20 und 60, vorzugsweise zwischen 30 und 50 liegend.

8. Verfahren nach Anspruch 5, wobei der Zeolithvorläufer vom Strukturtyp CON in einer Aluminosilikatform nach den folgenden Stufen hergestellt wird:
a) man bringt im wesentlichen in Abwesenheit von Alkaliionen einen Beta-Zeolith vom Strukturtyp BEA mit Bor (Borosilikat) und einen organischen Strukturbildner in Kontakt, der N,N,N,Trimethyl-2-Adamantylammoniumhydroxid ist, und man erhitzt auf eine geeignete Temperatur von 60 bis 220 °C;
wobei die Bedingungen der Stufe a) sind:
B/Si liegt atomar zwischen 0,02 und 0,2,
Atomverhältnis Strukturbildner/Si liegt zwischen 0,15 und 0,4, vorzugsweise zwischen 0,19 und 0,35,
H₂O/Si liegt zwischen 20 und 60, vorzugsweise zwischen 30 und 50;
b) man kalziniert das Produkt der Stufe a), man bringt es mit einer sauren Aluminiumlösung in Kontakt, um Aluminosilikat zu bilden oder man bringt das Produkt der Stufe a) auch in Kontakt mit einer sauren Lösung, man erhitzt und man bringt das erhitzte Produkt mit einer sauren Aluminiumlösung in Kontakt, um Aluminosilikat zu bilden.

9. Verfahren nach Anspruch 5, wobei der Zeolithvorläufer vom Strukturtyp CON in der Borosilikatform vorliegt, hergestellt:
- durch ein In-Kontakt-Bringen im wesentlichen in Abwesenheit von Alkaliionen, von einem Beta-Zeolith vom Strukturtyp BEA mit Bor (Borosilikat) und einem organischen Strukturbildner, der N,N,N,Trimethyl-2-Adamantylammoniumhydroxid ist, und man erhitzt auf eine geeignete Temperatur von 60 bis 220°C, wobei die Bedingungen des In-Kontakt-Bringens die folgenden sind:
. B/Si atomar zwischen 0,02 und 0,2 liegend,
. Atomverhältnis Strukturbildner/Si zwischen 0,15 und 0,4, vorzugsweise zwischen 0,19 und 0,35 liegend,
. H₂O/Si zwischen 30 und 60, vorzugsweise zwischen 40 und 50 liegend
und man kalziniert das erhaltene Produkt.

10. Verfahren nach Anspruch 5, wobei der Zeolithvorläufer vom Strukturtyp CON in der Aluminosilikatform vorliegt, hergestellt nach den folgenden Stufen:
a) man bringt im wesentlichen in Abwesenheit von Alkaliionen, einen Beta-Zeolith vom Strukturtyp BEA mit Bor (Borosilikat) und einen organische Strukturbildner in Kontakt, der N,N,N,Trimethyl-2-Adamantylammoniumhydroxid ist, man erhitzt auf eine geeignete Temperatur von 60 bis 220°C, wobei die Bedingungen der Stufe a) die folgenden sind:
. B/Si atomar zwischen 0,06 und 0,2 liegend, vorzugsweise 0,1 bis 0,2
. Atomverhältnis Strukturbildner/Si zwischen 0,10 und 0,2, vorzugsweise zwischen 0,15 und 0,35 liegend,
. H₂O/Si zwischen 20 und 60, vorzugsweise zwischen 30 und 50 liegend
b) man kalziniert das Produkt der Stufe a), man bringt es mit einer sauren Aluminiumlösung in Kontakt, um Aluminosilikat zu bilden oder man bringt das Produkt der Stufe a) auch in Kontakt mit einer sauren Lösung und man erhitzt und bringt das erhitzte Produkt mit einer sauren Aluminiumlösung in Kontakt, um Aluminosilikat zu bilden

11. Verfahren nach Anspruch 5, wobei der Zeolithvorläufer vom Strukturtyp CON in einer Aluminosilikatform nach den folgenden Stufen vorliegt, hergestellt:
- durch ein In-Kontakt-Bringen im wesentlichen in Abwesenheit von Alkaliionen, von einem Beta-Zeolith vom Strukturtyp BEA mit Bor (Borosilikat) und einem organischen Strukturbildner, der N,N,N,Trimethyl-2-Adamantylammoniumhydroxid ist, man erhitzt auf eine geeignete Temperatur von 60 bis 220°C, wobei die Bedingungen des In-Kontakt-Bringens die folgenden sind:
. B/Si atomar zwischen 0,06 und 0,2 liegend, vorzugsweise 0,1 bis 0,2
. Atomverhältnis Strukturbildner/Si zwischen 0,10 und 0,4, vorzugsweise zwischen 0,15 und 0,35 liegend,
. H₂O/Si zwischen 20 und 60, vorzugsweise zwischen 30 und 50 liegend
und man kalziniert das erhaltene Produkt.

12. Verfahren nach Anspruch 5, wobei der Zeolithvorläufer in Aluminosilikatform ein Aluminium-ausgetauschter SSZ26-Zeolith, ein SSZ33-Zeolith oder ein Aluminium-ausgetauschter CIT-1-Zeolith ist.

13. Verfahren nach Anspruch 5, wobei der Zeolithvorläufer in Borosilikatform ein SSZ33-Zeolith oder ein CIT-1-Zeolith ist.

14. Verfahren nach einem der Ansprüche 6 bis 11, wobei das Atomverhältnis Strukturbildner/Si zwischen 0,22 und 0,28 und in bevorzugter Weise zwischen 0,24 und 0,26 liegt.

15. Verwendung eines Zeolithen nach einem der Ansprüche 1 bis 4 oder hergestellt nach einem der Ansprüche 5 bis 14 in einem katalytischen Crackverfahren einer Kohlenwasserstoffcharge.

16. Verwendung eines Zeolithen nach Anspruch 15 in einer katalytischen Zusammensetzung, die einen anderen Crackkatalysator als diesen Zeolithen umfasst.

17. Verwendung nach Anspruch 16, wobei die Gewichtsprozente die folgenden sind:
a) von 0,1 bis 60%, vorzugsweise von 4 bis 50% und in noch bevorzugterer Weise von 10 bis 40 Gew.-% wenigstens eines anderen Zeolithen als der Zeolith der Erfindung und vorzugsweise der Y-Zeolithen der Faujasit-Struktur,
b) von 0,01 bis 60%, vorzugsweise von 0,05 bis 40% und in noch bevorzugterer Weise von 0,1 bis 20% wenigstens eines Zeolithen vom Strukturtyp CON in Wasserstoffform und,
c) wobei die Vervollständigung aus wenigstens einer Matrix gebildet ist.

## Claims

1. A phosphorous-containing zeolite with structural type CON, containing at most 10% by weight of phosphorous and having an X ray diffraction diagram after calcining which is substantially identical to that given in the following Table:
| 2θ (degrees) (Bragg angle) | Relative intensity I/I₀ |
|---|---|
| 7.85 - 7.95 | vs |
| 8.21 - 8.40 | w to m |
| 9.05 - 9.12 | w |
| 13.20 - 13.40 | w |
| 14.20 - 14.32 | w |
| 19.67 - 19.95 | w |
| 20.27 - 20.60 | s to vs |
| 21.36 - 21.63 | w to m |
| 22.03 - 22.23 | m to s |
| 22.89 - 22.75 | m |
| 23.06 - 23.33 | s to vs |
| 25.23 - 25.63 | w |
| 26.50 - 27.00 | m to s |
| 28.55 - 28.87 | w |
| 28.98 - 29.26 | w to m |
| 29.90 - 30.10 | w |
| 30.46 - 30.79 | w |
| 33.32 - 33.64 | w |
| 36.25 - 36.46 | vw to w |
| 36.77 - 36.91 | vw to w |
| very weak (vw) means less than 10; weak (w) means less than 20; medium (m) means in the range 20 to 40; strong (s) means in the range 40 to 60; very strong (vs) means more than 60. | |

2. A zeolite according to claim 1 in its aluminosilicate form, preferably with a Si/Al atomic ratio which is in the range 5 to 500.

3. A zeolite according to claim 2, in its borosilicate form, preferably with a Si/B atomic ratio which is in the range 5 to 500.

4. A zeolite according to any one of claims 1 to 3, in which the phosphorous content is at most 5% by weight of the zeolite.

5. A process for preparing a phosphorous-containing zeolite with structural type CON according to any one of claims 1 to 4, in which at least one zeolite precursor with structural type CON, which has optionally been calcined, is impregnated under suitable conditions with an aqueous solution of at least one acid selected from the group formed by H₃PO₃, H₃PO₄, (NH₄)₂HPO₄, (NH₄)H₂PO₄ or one of its salts, and the product obtained is calcined at a temperature of 350°C to 700°C.

6. A process according to claim 5, in which the zeolite precursor with structural type CON is in its aluminosilicate form is prepared using the following steps:
a) a beta zeolite with structural type BEA containing boron (borosilicate) is brought into contact in the substantial absence of alkaline ions with an organic template which is 1-N,N,N-trimethyl adamantammonium hydroxide and heated to a suitable temperature which is in the range 60°C to 220°C;
the contact conditions of step a) being:
• a B/Si atomic ratio in the range 0.02 to 0.2;
• a template/Si atomic ratio in the range 0.15 to 0.4, preferably in the range 0.19 to 0.35;
• a H₂O/Si ratio in the range 20 to 60, preferably in the range 30 to 50;
b) the product from step a) is calcined then brought into contact with an acidic aluminium solution to form the aluminosilicate, or the product from step a) is brought into contact with an acidic solution then heated and the heated product is brought into contact with an acidic aluminium solution to form the aluminosilicate.

7. A process according to claim 5, in which the zeolite precursor with structural type CON is in its borosilicate form prepared by bringing a beta zeolite with structural type BEA containing boron (borosilicate) into contact in the substantial absence of alkaline ions with an organic template which is 1-N,N,N-trimethyl adamantammonium hydroxide, heating to a suitable temperature which is in the range 60°C to 220°C, and calcining the product obtained;
the contact conditions being:
• a B/Si atomic ratio in the range 0.02 to 0.2;
• a template/Si atomic ratio in the range 0.15 to 0.4, preferably in the range 0.19 to 0.35;
• a H₂O/Si ratio in the range 20 to 60, preferably in the range 30 to 50.

8. A process according to claim 5, in which the zeolite precursor with structural type CON is in its aluminosilicate form, prepared using the following steps:
a) a beta zeolite with structural type BEA containing boron (borosilicate) is brought into contact in the substantial absence of alkaline ions with an organic template which is 2-N,N,N-trimethyl adamantammonium hydroxide and heated to a suitable temperature which is in the range 60°C to 220°C;
the conditions of step a) being:
• a B/Si atomic ratio in the range 0.02 to 0.2;
• a template/Si atomic ratio in the range 0.15 to 0.4, preferably in the range 0.19 to 0.35;
• a H₂O/Si ratio in the range 20 to 60, preferably in the range 30 to 50;
b) the product from step a) is calcined then brought into contact with an acidic aluminium solution to form the aluminosilicate, or the product from step a) is brought into contact with an acidic solution then heated and the heated product is brought into contact with an acidic aluminium solution to form the aluminosilicate.

9. A process according to claim 5, in which the zeolite precursor with structural type CON is in its borosilicate form, prepared:
• by bringing a beta zeolite with structural type BEA containing boron (borosilicate) into contact in the substantial absence of alkaline ions with an organic template which is 2-N,N,N-trimethyl adamantammonium hydroxide and heated to a suitable temperature which is in the range 60°C to 220°C;
the contact conditions being:
• a B/Si atomic ratio in the range 0.02 to 0.2;
• a template/Si atomic ratio in the range 0.15 to 0.4, preferably in the range 0.19 to 0.35;
• a H₂O/Si ratio in the range 30 to 60, preferably in the range 40 to 50; and the product obtained is calcined.

10. A process according to claim 5, in which the zeolite precursor with structural type CON is in its aluminosilicate form, prepared using the following steps:
a) a beta zeolite with structural type BEA containing boron (borosilicate) is brought into contact in the substantial presence of alkaline ions with an organic template which is 2-N,N,N-trimethyl adamantammonium hydroxide and heated to a suitable temperature which is in the range 60°C to 220°C;
the conditions of step a) being:
• a B/Si atomic ratio in the range 0.06 to 0.2, preferably 0.1 to 0.2;
• a template/Si atomic ratio in the range 0.10 to 0.4, preferably in the range 0.15 to 0.35;
• a H₂O/Si ratio in the range 20 to 60, preferably in the range 30 to 50;
b) the product from step a) is calcined then brought into contact with an acidic aluminium solution to form the aluminosilicate, or the product from step a) is brought into contact with an acidic solution then heated and the heated product is brought into contact with an acidic aluminium solution to form the aluminosilicate.

11. A process according to claim 5, in which the zeolite precursor with structural type CON is in its borosilicate form, prepared:
• by bringing a beta zeolite with structural type BEA containing boron (borosilicate) into contact in the substantial presence of alkaline ions with an organic template which is 2-N,N,N-trimethyl adamantammonium hydroxide and heated to a suitable temperature which is in the range 60°C to 220°C;
the contact conditions being:
• a B/Si atomic ratio in the range 0.06 to 0.2, preferably 0.1 to 0.2;
• a template/Si atomic ratio in the range 0.10 to 0.4, preferably in the range 0.15 to 0.35;
• a H₂O/Si ratio in the range 20 to 60, preferably in the range 30 to 50; and the product obtained is calcined.

12. A process according to claim 5, in which the zeolite precursor in its aluminosilicate form is a SSZ-26 zeolite, a SSZ-33 zeolite exchanged with aluminium or a CIT-1 zeolite exchanged with aluminium.

13. A process according to claim 5, in which the zeolite precursor in its borosilicate form is a SSZ-33 zeolite or a CIT-1 zeolite.

14. A process according to any one of claims 6 to 11, in which the template/Si atomic ratio is in the range 0.22 to 0.28, preferably in the range 0.24 to 0.26.

15. Use of a zeolite according to any one of claims 1 to 4, or prepared according to any one of claims 5 to 14, in a process for catalytic cracking of a hydrocarbon feed.

16. Use of a zeolite according to claim 15 in a catalytic composition comprising a cracking catalyst other than said zeolite.

17. Use according to claim 16, in which the percentages by weight are as follows:
a) 0.1% to 60% by weight, preferably 4% to 50%, more preferably 10% to 40%, of at least one zeolite other than the zeolite according to the invention, preferably Y zeolite with a faujasite structure;
b) 0.01% to 60%, preferably 0.05% to 40%, more preferably 0.1% to 20%, of at least one zeolite with structural type CON in its hydrogen form; and
c) the complement being constituted by at least one matrix.
